Europäisches Patentamt

(19) European Patent Office

Office européen des brevets

(11) Publication number : **0 495 758 A1**

(12) # EUROPEAN PATENT APPLICATION

(21) Application number : **92830010.2**

(22) Date of filing : **15.01.92**

(51) Int. Cl.⁵ : **F16K 31/12, E21B 33/035, E21B 34/16**

Priority 160191 IT PR91A000003.

(30) Priority : **16.01.91**

(43) Date of publication of application :
**22.07.92 Bulletin 92/30**

(84) Designated Contracting States :
**AT BE CH DE DK ES FR GB GR LI LU NL PT SE**

(71) Applicant : **BIFFI ITALIA S.r.L.**
**Località Caselle S. Pietro**
**I-29017 Fiorenzuola D'Arda (Piacenza) (IT)**

(72) Inventor : **Ziliani, Rino**
**Via Centro, 157**
**I-29010 Lusurasco di Alseno (Piacenza) (IT)**

(74) Representative : **Lanzoni, Luciano**
**BUGNION S.p.A. Via Emilia Est, 25**
**I-41100 Modena (IT)**

(54) **A torque limiter device for gas hydraulic actuators.**

(57)    Used in conjunction with a gas hydraulic actuator, the device is designed to prevent the transmission of stress-inducing torque to a valve by unloading excess gas pressure against a spring bias whenever the difference in pressure between the gas directed into one chamber (11) and the oil directed into another chamber (9) rises above a certain value, determined by setting the spring (6) at a suitable tension ; in the event that a valve operated by the actuator should become stuck, the torque limiting action will disallow the application of excessive stress, thereby protecting the valve from damage or even total breakdown.

fig.1

EP 0 495 758 A1

The present invention relates to a torque limiting device for gas hydraulic actuators.

The disclosure is concerned in particular with those gas hydraulic actuators in which the opening and closing movement of a valve is brought about by the reciprocating motion of a piston.

Actuators of the type designed to open and close a valve incorporate devices serving to regulate, and more exactly to limit the torque transmitted to the valve control stem, in such a manner as to protect the valve from breakage or damage in the event of the valve itself becoming jammed.

In this context, jamming is that situation produced by prolonged inactivity which results in the moving parts of the valve 'sticking' one to another. In the case of rotary ball valves, for example, it can occur that the seals associated permanently with the valve housing become stuck to the rotating ball valve element. Thereafter, the application of heavy stresses to the valve control stem may well result in breakage or damage, whereas lighter stresses, applied repeatedly, can succeed in freeing the valve without mishap.

The operation of conventional torque limiters, which serve essentially to forestall potentially damaging situations as described above, is based or a comparison of pressures internally of a hydraulic cylinder, of which the piston opens and closes the valve; the output obtained in this way is used to operate the pneumatic control of solenoid valves in the actuator circuit.

Thus, use is made of a hydraulic signal (obtained by sensing the two cylinder pressures) to produce a mechanical movement proportional to the difference between the cylinder pressures; this same movement is counteracted by a spring, and transmitted to a pneumatic valve of which the function is to shut off and relieve the flow of gas, thereby limiting the stress applied to the valve.

Such devices are somewhat complex, however, being designed to sense oil pressures in the hydraulic cylinder of the actuator and thus requiring an auxiliary component to engage the moving part of the actuator which controls the flow of gas; the control achieved is therefore indirect, since the source is hydraulic, and the function controlled is pneumatic.

The object of the present invention is to overcome the drawbacks mentioned above, and in particular to provide a torque limiting device capable of acting both on the hydraulic section and on the pneumatic section of an actuator, in such a way as to render the pneumatic section direct acting and dispense with the need for auxiliary pilot stages.

Another object of the invention is to obtain a more simple construction and a lower cost of manufacture than afforded by conventional devices.

The stated objects are comprehensively realized in a torque limiter device for gas hydraulic actuators according to the invention, which is characterized in that it comprises:

– an inlet connected to the hydraulic circuit of the actuator, through which oil is admitted to a first chamber of the device;

– a pressure inlet connected to the pneumatic circuit, through which gas is admitted to a second chamber of the device, distinct from the first chamber;

– internal sliding elements affording opposite surfaces of identical cross sectional area offered respectively to the oil and the gas occupying the first and second chambers, and capable of movement against the force of adjustable spring means to a position, assumed whenever the pressure values of the gas and the oil are substantially dissimilar, in which the second chamber is connected with a port through which gas occupying the second chamber can unload.

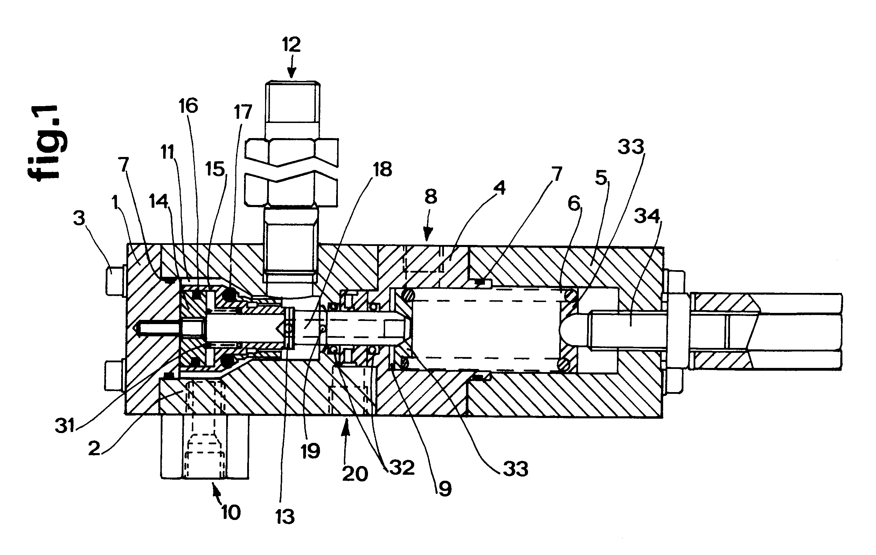

The invention will now be described in detail, by way of example, with the aid of the accompanying drawing, which is a longitudinal median section through the device.

Referring to the drawing, 1 denotes the end cover flange of a top housing 2 of the device, secured in place with screws 3.

The top housing 2 is connected to an intermediate housing 4, coupled in its turn to a bottom housing denoted 5 serving to accommodate a spring 6.

O-rings 7 ensure a tight seal between the flange and the top housing and between the intermediate and bottom housings.

The intermediate housing 4 affords a radial inlet 8 admitting oil from a valve-actuating hydraulic cylinder (not illustrated), which is directed into a chamber denoted 9.

The top housing 2 affords an inlet 10 via which gas is admitted into a second chamber 11, an outlet 12 connected to a gas-oil reservoir (not shown), and an unloading port 20.

14 denotes a piston accommodated by an insert 15 occupying the second chamber 11; piston and insert are interfaced by way of an O-ring 16.

The insert 15 is encircled by a further O-ring 17 designed to enter into engagement with the internal walls of the top housing 2 whenever the insert 15 is caused to shift within the second chamber 11 by the pressure of the gas, defeating the force of the spring 6 and the pressure of the oil in the first chamber 9.

The piston 14 is rigidly associated with a central rod 18 furnished with relative scals 32, which is disposed coaxially with the centre axis of the device and affords an orifice 19 serving to connect the second chamber 11 with the unloading port 20.

31 denotes a further spring seated internally of the insert 15, ensheathing the central rod 18 and compressible by the piston 14.

The rod 18 affords an annular projection 13 engaged forcibly by the insert 15 when set in motion.

33 denotes a plate against which the spring 6 is seated, and 34 a set screw impinging on the plate, by means of which the spring can be selectively tensioned.

The piston 14, insert 15 and rod 18 constitute internal sliding elements counteracted by the adjustable spring 6.

As regards the operation of the device disclosed, which is connected into a "gas-over-oil" circuit, a difference in pressure generated between the two chambers 9 and 11, and more especially a rise in gas pressure above oil pressure, has the effect of shifting the piston 14 and the insert 15, initially together.

Once the O-ring 17 enters into engagement with the internal wall of the top housing 2, the movement of the insert 15 is arrested; the piston 14 remains free to continue forward, however, and in the event that the aforementioned difference in pressures is still greater, and sufficient even to compress the spring 6, the orifice 19 will draw into alignment with the unloading port 20 in such a way that gas is both released slowly from the chamber 11 and prevented from entering by way of the inlet 10.

Under normal conditions, gas enters the device by way of the inlet 10 and exits through the outlet 12 to the reservoir, whereas with the orifice 19 open to the port 20, the gas is unloaded.

The cross-sectional surface areas exposed to gas and oil pressure are distinct one from the other, though of identical proportions.

As long as the fluid pressures or the corresponding forces remain matched, the piston stays motionless and there is no resisting torque.

Conversely, if the resisting torque offered by the valve is high, oil pressure will not increase, as the piston of the relative hydraulic actuator does not move (valve sticking), and the difference in gas and oil pressures thus increases; if the value of the pressure difference rises above the setting of the spring 6, then gas will begin to unload and unduly high stresses on the valve are avoided.

## Claims

1) A torque limiter device for gas hydraulic actuators characterized
in that it comprises:
   − an inlet (8) connected to the hydraulic circuit of the actuator, through which oil is admitted to a first chamber (9) of the device;
   − a pressure inlet (10) connected to the pneumatic circuit, through which gas is admitted to a second chamber (11) of the device, distinct from the first chamber (9);
   − internal sliding elements affording opposite surfaces of identical cross sectional area offered respectively to the oil and the gas occupying the first and second chambers, and capable of movement against the force of adjustable spring means (6) to a position, assumed whenever the pressure values of the gas and the oil are substantially dissimilar, whereby the second chamber (11) is connected with a port (20) through which gas occupying the second chamber can unload.

2) A device as in claim 1, wherein internal sliding elements comprise a central rod (18) affording an annular projection (13), an insert (15) ensheathing the rod and designed to transmit movement to the rod by impinging on the annular projection to the point at which an O-ring (15) carried by the insert enters into stable engagement with a corresponding internal wall of the device, and a piston (14) rigidly associated with the rod (18) and slidable internally of the insert (15), by which the rod is carried forward following the arrest of the insert (15) to defeat the resistance of a spring (31).

3) A device as in claim 1, wherein the rod (18) affords at least one orifice (19) by way of which the second chamber (11) is connected with the gas unloading port (20).

4) A device as in claims 1 and 2, comprising a spring (6) seated against a guide plate (33), and a set screw (35) impinging on the plate by means of which to select the tension of the spring.

fig.1

European Patent
Office

**EUROPEAN SEARCH REPORT**

Application Number

EP   92 83 0010

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5 ) |
|---|---|---|---|
| A | PATENT ABSTRACTS OF JAPAN vol. 8, no. 146 (M-307)7 July 1984 & JP-A-59 043 278 ( KOBE SEIKOSHO KK ) 10 March 1984 * abstract * --- | 1 | F16K31/12 E21B33/035 E21B34/16 |
| A | GB-A-1 035 721 (GEWERKSCHAFT EISENHÜTTE WESTFALIA) * the whole document * --- | 1 | |
| A | EP-A-0 387 205 (BIFFI) ----- | | |

TECHNICAL FIELDS
SEARCHED (Int. Cl.5 )

F16K
E21B

The present search report has been drawn up for all claims

| Place of search | Date of completion of the search | Examiner |
|---|---|---|
| THE HAGUE | 28 APRIL 1992 | CHRISTENSEN C. |

EPO FORM 1503 03.82 (P0401)